# EUROPEAN PATENT SPECIFICATION

(11) **EP 1 351 896 B1**
(45) Date of publication and mention of the grant of the patent: **29.06.2005**
(21) Application number: 01983065.2
(22) Date of filing: 16.11.2001
(51) Int. Cl.: C02F 9/04, C01G 49/00

(54) **METHOD FOR THE RECOVERY OF IRON FROM ACIDIC, METAL-CONTAMINATED WATER**
VERFAHREN ZUR RÜCKGEWINNUNG VON EISEN AUS SAUREM, METALLVERUNREINIGTEM WASSER
PROCEDE DE RECUPERATION DE FER A PARTIR D'EAU ACIDE CONTAMINEE PAR DU METAL

(30) Priority: 07.12.2000 SE 0004504
(43) Date of publication of application: 15.10.2003
(73) Proprietor: Stora Enso Aktiebolag, 791 80 Falun (SE)
(72) Inventor: MATTSSON, Erik, S-790 23 Svärdsjö (SE)
(74) Representative: Johansson, Lars E.
(86) International application number: PCT/SE2001/002544
(87) International publication number: WO 2002/046107

(56) References cited:
- US-A- 3 882 018
- DATABASE WPI Week 198239, Derwent Publications Ltd., London, GB; AN 1982-82210E, XP002907684 & JP 57 134 564 A (MITSUBISHI CHEM IND LTD ET AL.) 19 August 1982
- WILLIAM S. DOYLE: 'Deep coal mining: waste disposal technology' NOYES DATA CORPORATION 1976, PARK RIDGE, NEW JERSEY, pages 197 - 203, XP002907685

## Description

### TECHNICAL FIELD

The present invention relates to a method of obtaining an essentially pure iron salt from acidic, metal contaminated water comprising Fe²⁺, at the same time as the water is purified. The method has been developed mainly for purification of acidic, metal contaminated mine waters, but may also be utilised on other types of acidic, metal contaminated waters comprising Fe²⁺.

### PRIOR ART AND PROBLEMS

Acidic water residuals originating from mining or similar activities, almost always contain a mixture of different metals, which in large scale may be difficult to separate from each other in an economically feasible way. The actual purification of the water is usually no problem as such, but the problem lies in that in conventional purification the metals are obtained mixed with each other or at a purity which is too low for them to be utilised for other purposes. Instead, the metals separated from the water must be dumped, resulting only in costs and giving rise to a risk of negative environmental effects.

Known patents relating to the treatment of metal contaminated waters are e.g. JP 1315389, JP 1090089, JP 61278397, JP 61146389, JP 59186694, JP 59154192, JP 58131190, JP 61204088, JP 58205580 and US 5043078.

### BRIEF ACCOUNT OF THE INVENTION

The present invention aims at obtaining an essentially pure iron salt from an acidic, metal contaminated water comprising Fe²⁺, which iron salt preferably is in such a state and concentration and is so pure that it may be sold as a product as such, preferably as a chemical for water purification, whereby it may cover a major or minor part of the operating costs for the purification of the water. Another purpose is to also obtain other metals/metal salts from the contaminated water in such a way that also these are obtained in such a state and concentration and at so high a purity that they may be sold as products as such. Preferred examples of such metal salts are copper-, zinc- and or aluminium salts. Moreover, it is a primary purpose of the invention that the water obtained after the last step of the purification should be pure enough to be used as process water or to be released into the recipient. Most preferred, there is no rest products in appreciable amounts after the treatment according to the invention, which rest products would have to be dumped. Instead, the different metals have been separately recovered from the contaminated water, in their main contents, as different metal salts.

These and other purposes are achieved by the method according to the invention as defined by patent claim 1.

A fundamental idea in the method of treatment according to the invention, is that a cationactive ion-exchange compound which is selective for trivalent iron, Fe³⁺, is used for the recovery of essentially pure iron salt. Accordingly, this ion-exchange compound is of a certain, carefully chosen, type which in the following is denoted "type A". An ion-exchange compound of type A is a strongly acidic ion-exchange compound, which is mainly selective for copper but also for trivalent iron. Moreover, it has the capability to catch certain other metals present at low concentrations in the contaminated water, however not Fe²⁺. An ion-exchange compound of type A typically consists of an acidic ion-exchange compound or an acidic ion-exchange resin, having a Fe³⁺/Zn²⁺ selectivity larger than 1000 at a pH < 2.5, thus leading to a 1000 times more Fe³⁺ than Zn²⁺ adsorbing on the compound, based on weight. Such a ion-exchange compound may be constituted by Amberlite IRC 748 (sold by Rohm and Haas) or Lewatit TP 207 (sold by Bayer), for example.

As a consequence to the fact that the ion-exchange compound A also catches certain other contaminating metals in addition to just Fe³⁺, a difficulty arises in obtaining an essentially pure salt of trivalent iron by aid of this ion-exchange compound A. According to the invention, this problem is solved by the treatment being performed in several steps, the same type of ion-exchange compound, type A, being used in at least two steps. In the first step, hereafter denoted step a, ions of copper and trivalent iron present in the water are caught in a first ion-exchange column, but also certain other metal ions present in the water are caught in this ion-exchange column, which means that the water is purified also in respect of these other metal ions. The amount of trivalent iron caught in this first step may be controlled thanks to the ion-exchange compound of type A mainly being selective to copper, which means that trivalent iron already caught can be replaced by copper if the column is operated to full capacity.

Thereafter, in a step b, Fe²⁺ ions present in the water are in essential completely oxidised to Fe³⁺ ions. These newly formed Fe³⁺ ions are thereafter recovered in a following step, step c, in a second ion-exchange column having an ion-exchange compound of the same type, type A, as the ion-exchange compound used in step a.

Thanks to the other metals that also can be caught by the ion-exchange compound of type A, already having been removed from the water in step a, essentially only Fe³⁺ ions will be recovered from the water in step c. Thereafter, the ion-exchange compound A from step c may be regenerated in a subsequent step, step d, by aid of an acid, e.g. hydrochloric acid or sulphuric acid, a solution of essentially pure iron (III) salt, e.g. iron (III) sulphate or iron (III) chloride, being obtained. Suitably, the purification of the water thereafter continues in one or more additional steps, adapted to remove other contaminants from the water, usually metal contaminants. An alternative is of course that such other contaminants are removed from the water already before the recovery of Fe³⁺ ions or possibly between the at least two steps that comprise treatment with ion-exchange compound of type A.

### DESCRIPTION OF THE DRAWINGS

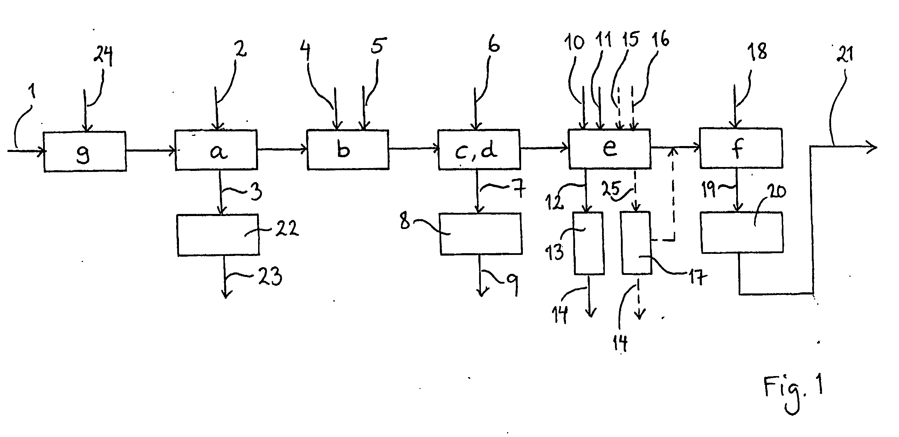

In the following, the invention will be described in greater detail with reference to Fig. 1 which shows a block diagram of a treatment process according to a preferred embodiment of the invention.

In the process according to Fig. 1, an incoming, metal contaminated water, e.g. a mine water, which typically has a pH of 1 - 5, is treated. The method according to the invention is applicable on water having contaminant concentrations in a large span of concentrations according to the below.

| | |
|---|---|
| Sulphate | 0.1-80 g/l |
| Total Fe | 0.1-20 g/l |
| Fe²⁺ | 0.1-20 g/l |
| Fe³⁺ | 0-20 g/l |
| Zn | 0.1-7 g/l |
| Mg | 0-10 g/l |
| Na | 0-10 g/l |
| Ca | 0-1 g/l |
| Al | 0-5 g/l |
| Mn | 0-5 g/l |
| Cu | 0-1 g/l |
| Pb | 0-1 g/l |
| Co, Cd, Sr, Ni, Cr, Li, As, Mo and others < 0.1 g/l each. | |

### Optional introductory step, step g

In an optional, but not always necessary step, here denoted step g, a part of the bivalent iron (Fe²⁺) in the water is oxidised to the trivalent state (Fe³⁺) by aid of air 24. The oxidation of Fe²⁺ to Fe³⁺ by air is what normally occurs in nature. However, at the low pH of the water/mine water this oxidation proceeds very slowly. Consequently, this oxidation step is preferably performed at pressurised conditions, which will give a considerably shortened reaction time compared to an oxidation step with air which is performed at atmospheric conditions. E.g. at a temperature of 15-25 °C and a pressure of about 10 bar, about 20 % of the bivalent iron present in the water may be oxidised to trivalent iron in about 10-15 minutes. Preferred pressurised conditions may be realised by e.g. finely distributed air being supplied by aid of a compressor, to the water after the pump down in the mine, i.e. where an over-pressure exists due to the water head, or by the air being supplied to a pressurised reactor above ground. Possibly, a minor adjustment of water pH may be required, more precisely a lowering of pH to about 1.6 - 2.0, preferably about 1.8 - 1.9, before, during or directly after the oxidation step g, in order to avoid precipitation of iron hydroxide or jarosite. The purpose of the oxidation step g is to make use of the cheapest possible oxidisation agent, i.e. air, in order to perform a part of the oxidation of Fe²⁺ to Fe³⁺, required for the invention. The final goal is a complete oxidation, which is performed in a subsequent oxidation step, step b.

### Step a

In a treatment step, step a, directly following step g, copper, an optionally desired amount of trivalent iron and certain other metal contaminants possibly present, such as vanadium and nickel, are recovered by aid of the cation-exchange compound of type A, described above. The ion-exchange device is suitably of conventional type having several columns, e.g. three columns where two are alternatingly connected in series while a third is regenerated. It is however also possible to use a continuous ion-exchanger if requirements exists on a lower residual concentration in the water and a higher concentration in the recovered concentrate 3. The ion-exchanger is regenerated by acid 2, preferably hydrochloric acid or sulphuric acid. The recovered concentrate 3 comprises copper salt as copper sulphate or copper chloride, and possibly trivalent iron as e.g. iron (III) sulphate or iron (III) chloride, which after increase of the concentration, e.g. by evaporation 22, forms a product 23 which may be used in connection with the manufacturing of red colouring pigment, e.g. In certain mine waters, the concentration of copper is however low, in which case the purpose of step a mainly is to remove other possible metals that get caught on ion-exchange compound of type A, so that these will not contaminate the iron salt which is recovered in subsequent step(s) (step c-d). On the other hand, if the recovery of essentially pure copper is of special interest, step a is adapted to recover as little trivalent iron as possible in this step. In this case it may also be preferred to execute step g after step a instead of before step a.

### Step b

In step b, a complete or essentially complete oxidation of Fe²⁺ to Fe³⁺ is performed. Most preferred, this oxidation is performed in two or more steps, the water being treated with different oxidisation agents of successively increasing oxidising effect. First, an oxidation with air is performed, possibly at pressurised conditions in the same or similar way as in step g. Thereafter, oxidation with oxygen gas is performed and finally with hydrogen peroxide or possibly ozone. Also the oxidation with oxygen gas, when such is used, is preferably performed at pressurised conditions. An alternative is that the oxidation is performed without utilisation of air or oxygen gas, economical or practical aspects mainly deciding which oxidisation agent or agents should be used. Addition of air and/or oxygen gas is symbolically illustrated by arrow 4 in the figure, while addition of stronger oxidising agents is illustrated by arrow 5. The pH is adjusted by an acid, before, during or after oxidation, so that a final pH below 2 is obtained after the oxidation.

### Step c-d

In step c, the trivalent iron is recovered by aid of an ion-exchange compound of the same type, type A, as the one used in step a. By the concept of "of the same type" it should here be understood that it is most preferred that exactly the same type of ion-exchange compound is used both in step a and in step c, but that it also is conceivable that two different sorts of ion-exchange compounds are used, both of them however falling under the definition of "type A" which has been done above.

The incoming water to the ion-exchange step c should have a pH of between 1 and 2. The best result is obtainable when a continuously operating ion-exchange column is used, e.g. of the type called ISEP, it however also being possible to use conventional ion-exchange equipment, i.e. an equipment comprising two or more columns which are successively regenerated during the course of the process. In step d, the ion-exchange compound is regenerated by an acid 6, preferably hydrochloric acid or sulphuric acid, the concentrate thereby obtained being a solution of a Fe³⁺ salt, e.g. iron (III) chloride or iron (III) sulphate. Thanks to the ion-exchange compound being selective to Fe³⁺, and thanks to the fact that such an ion-exchange compound already has been used in a previous step, whereby other metals which also get caught on this type of ion-exchange compound already have been removed, a very pure iron product may be achieved in this step. Preferably, the purity is so high that the recovered iron product fulfils the requirements to be used as a water purification chemical. However, the product 7, which is obtained, has a concentration which is too low for it to be able to be sold as a merchandise, which means that it has to be concentrated by e.g. crystallisation or evaporation 8. After evaporation, the product 9 has a concentration of at least 7 weight-%, preferably about 10-13 weight-%, calculated on Fe. After crystallisation, the product 9 consists of a ferric salt, such as iron (III) sulphate. Any free acid remaining after the crystallisation step may be recirculated to an optional step of the process, where acid is required. Optionally, product from step c may be mixed into product from step a for use in the manufacturing of red paint. The water which exits from the ion-exchange equipment is preferably led to the next step.

### Step e

In step e, a continuing purification of the water takes place in respect of other metals or other contaminants, here exemplified by zinc. The recovery of zinc may be performed either by ion-exchanging or by precipitation, preferably as zinc sulphide.

In the case of ion-exchanging, use is made of an ion-exchange compound, type B, which is selective to zinc. The ion-exchange compound of type B is preferably an acidic or neutral ion-exchange compound or an ion-exchange resin, having a selectivity Zn²⁺/Ca²⁺ larger than 100, and selectivity Zn²⁺/Al³⁺ larger than 100, at pH < 7 and calculated on weight. Before the ion-exchanging, the pH of the water is increased by alkali 10, e.g. magnesium oxide or hydroxide or sodium hydroxide, to a suitable level depending on which type of ion-exchange compound that is used. Regeneration of the ion-exchange compound is performed by aid of an acid 11, e.g. hydrochloric acid or sulphuric acid, whereafter the concentrate 12 obtained, which comprises a zinc salt, e.g. zinc chloride or zinc sulphate, is further concentrated, e.g. by evaporation 13. The product 14 obtained after evaporation is of adequate concentration and purity in order for it to be sold as a merchandise.

When on the other hand precipitation of zinc is utilised, this is performed after a possible adjusting of pH with alkali 10, suitably magnesium oxide or hydroxide or sodium hydroxide, to bring pH to 2-5 after the precipitation, preferably 3-4 and even more preferred about 3.5. Preferably, zinc is precipitated as zinc sulphide, in which case use may be made of e.g. sodium sulphide or green liquor from a sulphate pulp mill, as a source of sulphide 15. The formed precipitate (ZnS) may optionally be flocculated by addition of a flocculation agent 16, e.g. poly-acrylamide. As an alternative to the addition of a flocculation agent, or in combination, the sludge may recirculated to the alkali addition step or just before the addition of a precipitation chemical 15, in order to the improve flocculation. The sludge 17 is thereafter separated by e.g. sedimentation, flotation or filtering, whereafter the sludge may be dewatered in a press, optionally in connection with washing of the sludge if a requirement to remove solute salts from the sludge exists. The zinc product 14 obtained, exhibits adequate concentration and purity to be sold as a merchandise. One advantage is attained in that a more pure zinc product may be achieved when the iron already has been removed, in comparison with the case if zinc was to be recovered before removal of the iron.

### Step f

By addition of alkali 18, suitably magnesium hydroxide or sodium hydroxide, to the water from step e, there is achieved an increase of the pH of the water, to a pH of about 5-9, preferably 6-7 and even more preferred 6-6.5. This results in a precipitation of the aluminium present in the water. The formed precipitate 19 may optionally be flocculated by addition of a flocculation agent, e.g. poly-acrylamide, before being separated 20 by e.g. sedimentation, flotation or filtering, whereafter the sludge may be dewatered in a press, optionally in connection with washing of the sludge if a requirement to remove solute salts from the sludge exists. The aluminium product obtained, exhibits adequate concentration and purity to be sold as a merchandise, e.g. for the manufacturing of chemicals for purification of water. One possible use may be to mix it into the concentrated ferric salt solution from the ion-exchange step c-d.

The water 21 obtained after step f will be of such a quality and purity that it in most cases may be used as process water or may be released to a recipient without any further purification activities. Hereby, it should be understood that by the concept of pure water, which may be released to a recipient, it is meant water that does not contain compounds in amounts harmful to the nature, whereas however certain magnesium salts and/or calcium salts e.g., may remain in the water.

### EXAMPLE

An experiment was performed, in which an incoming water of the composition shown in table 1, was purified. No introductory oxidation was performed, i.e. no step g. The ion-exchange compound Amberlite IRC 748 (Rohm and Haas) was used in step a, as well as in step c. The oxidation in step b, between steps a and c, was performed by use of peroxide only. Zinc was precipitated in step e as zinc sulphide at pH 3.5, by addition of green liquor. In table 1, there is shown the composition of the water after the different steps, as well as the composition of the iron product recovered in step c.

**Table 1**

| | Incoming water | After step a | After step c | After step e | After step f | Fe product from step c |
|---|---|---|---|---|---|---|
| Fe, mg/l | 6000 | 5400 | 5 | 5 | 0.2 | 23000 |
| Cu, mg/l | 15 | 0.1 | 0.02 | 0.01 | 0.01 | 0.3 |
| Zn, mg/l | 1500 | 1500 | 1500 | 2 | 0.5 | 2 |
| Al, mg/l | 300 | 300 | 300 | 300 | 0.5 | 5 |
| Ca, mg/l | 400 | 400 | 400 | 400 | 400 | 20 |

The invention is not limited to the embodiments described above, but may be varied within the scope of the claims. Thus, it should be realised e.g. that although it is preferred according to the invention that only the steps described above are performed directly after each other, it is however also conceivable that also other steps, known per se and adapted and optimised to remove other contaminants, usually metal contaminants, may be used in the purification process in any optional position.

## Claims

1. Method of obtaining an essentially pure iron salt from acidic, metal contaminated water (1) comprising Fe²⁺, **characterised in** the steps that:
a) said contaminated water is brought to pass through a cationactive ion-exchange compound of a type A, which is selective to Fe³⁺,
b) the water from step a is treated with one or more oxidising agents, so that Fe²⁺ present in the water is oxidised to Fe³⁺,
c) the water from step b, now comprising Fe³⁺, is brought to pass through an ion-exchange compound of the same type, type A, as the ion-exchange compound in step a,
d) the ion-exchange compound in step c is regenerated, a solution of said essentially pure iron salt being obtained.

2. Method according to claim 1, **characterised in that** in step a, the water is purified also in respect of certain other metal ions present in low contaminant concentrations in the water, preferably copper ions, which also get caught by the cationactive ion-exchange compound of type A.

3. Method according to claim 2, **characterised in that** the ion-exchange compound in step a is regenerated (2, 22), whereby a copper salt (23) is recovered.

4. Method according to any one of the preceding claims, **characterised in that** said ion-exchange compound of type A consists of an acidic cation-exchange compound with a selectivity Fe³⁺/Zn²⁺ larger than 1000 at pH < 2.5, calculated on weight.

5. Method according to any one of the preceding claims, **characterised in that** Fe²⁺ present in the water is essentially completely oxidised to Fe³⁺ in step b, said oxidising agent (4, 5) being chosen from the group that consists of air, oxygen gas, hydrogen peroxide, ozone and combinations of the same, preferably in treatment steps with successively increasing oxidising effect, following each other.

6. Method according to any one of the preceding claims, **characterised in that** said solution from step d containing iron salt is concentrated (8) and is thereafter utilised as water purification chemical (9).

7. Method according to any one of the preceding claims, **characterised in** an additional step, step g, which is performed directly before or directly after step a, in which step g the water is treated with an oxidising agent (24) so that Fe²⁺ present in the water is partly oxidised to Fe³⁺, said oxidising agent preferably consisting of air and said treatment in step g preferably being executed at pressurised conditions.

8. Method according to any one of the preceding claims, **characterised in that** the purification of the water continues after step c-d, in one or more additional purifying steps adapted and optimised for recovery of one or more additional contaminants in the water.

9. Method according to claim 8, **characterised in that** one of the additional steps consists of a step e, which is performed after step c, in which step e zinc is recovered, preferably by the water being brought to pass through an ion-exchange compound of a type B, which is different from the ion-exchange compound of type A, which ion-exchange compound B is thereafter regenerated (11) for recovery of a solution (12) of a zinc salt, or by a precipitation chemical (15) being added to the water for precipitation of a zinc salt which is thereafter separated (17) from the water.

10. Method according to claim 9, **characterised in that** said ion-exchange compound of type B consists of an acidic or neutral cation-exchange compound having a selectivity Zn²⁺/Ca²⁺ larger than 100, and a selectivity Zn²⁺/Al³⁺ larger than 100, at pH < 7 and calculated on weight.

11. Method according to claim 9, **characterised in that** said precipitation chemical (15) consists of a sulphide, preferably sodium sulphide or green liquor, and **in that** the formed precipitate is flocculated before said separation (17).

12. Method according to claim 8, **characterised in that** one of the additional steps consists of a step f, which is performed after step c, in which step f aluminium is recovered, preferably by a precipitation chemical (18) added to the water for precipitation of an aluminium salt which is thereafter separated (20) from the water.

13. Method according to any one of the preceding claims, **characterised in that** essentially pure water (21) remains after a last step in the method, which water is utilised as process water or is released to a recipient.

## Patentansprüche

1. Verfahren zur Herstellung eines im wesentlichen reinen Eisensalzes aus Fe²⁺ enthaltendem saurem, metallverunreinigtem Wasser (1), **dadurch gekennzeichnet, daß** man:
a) das verunreinigte Wasser durch eine kationenaktive Ionenaustauschverbindung vom Typ A, die für Fe³⁺ selektiv ist, leitet,
b) das Wasser aus Schritt a mit einem oder mehreren Oxidationsmitteln behandelt, so daß in dem Wasser vorhandenes Fe²⁺ zu Fe³⁺ oxidiert wird,
c) das nunmehr Fe³⁺ enthaltende Wasser aus Schritt b durch eine Ionenaustauschverbindung vom gleichen Typ (Typ A) wie die Ionenaustauschverbindung in Schritt a leitet und
d) die Ionenaustauschverbindung in Schritt c regeneriert, wobei man eine Lösung von im wesentlichen reinem Eisensalz erhält.

2. Verfahren nach Anspruch 1, **dadurch gekennzeichnet, daß** man in Schritt a das Wasser auch in bezug auf bestimmte andere Metallionen reinigt, die in dem Wasser in kleinen Verunreinigungskonzentrationen vorliegen, vorzugsweise Kupferionen, die ebenfalls von der kationenaktiven Ionenaustauschverbindung des Typs A abgefangen werden.

3. Verfahren nach Anspruch 2, **dadurch gekennzeichnet, daß** man die Ionenaustauschverbindung in Schritt a regeneriert (2, 22), wodurch man ein Kupfersalz (23) zurückgewinnt.

4. Verfahren nach einem der vorhergehenden Ansprüche, **dadurch gekennzeichnet, daß** die Ionenaustauschverbindung vom Typ A aus einer sauren Kationenaustauschverbindung mit einer gewichtsbezogenen Fe³⁺/Zn²⁺-Selektivität von mehr als 1000 bei pH < 2,5 besteht.

5. Verfahren nach einem der vorhergehenden Ansprüche, **dadurch gekennzeichnet, daß** man in Schritt b in dem Wasser vorliegendes Fe²⁺ im wesentlichen vollständig zu Fe³⁺ oxidiert, wobei man das Oxidationsmittel (4, 5) aus der Gruppe bestehend aus Luft, Sauerstoffgas, Wasserstoffperoxid, Ozon und Kombinationen davon auswählt, vorzugsweise in aufeinanderfolgenden Behandlungsschritten mit sukzessive zunehmender Oxidationswirkung.

6. Verfahren nach einem der vorhergehenden Ansprüche, **dadurch gekennzeichnet, daß** man die Eisensalz enthaltende Lösung aus Schritt d aufkonzentriert (8) und danach als Wasserreinigungschemikalie (9) verwendet.

7. Verfahren nach einem der vorhergehenden Ansprüche, **gekennzeichnet durch** einen zusätzlichen Schritt (Schritt g), der direkt vor oder direkt nach Schritt a durchgeführt wird, bei dem man das Wasser mit einem Oxidationsmittel (24) behandelt, so daß in dem Wasser vorliegendes Fe²⁺ teilweise zu Fe³⁺ oxidiert wird, wobei das Oxidationsmittel vorzugsweise aus Luft besteht und die Behandlung in Schritt g vorzugsweise unter Druck durchgeführt wird.

8. Verfahren nach einem der vorhergehenden Ansprüche, **dadurch gekennzeichnet, daß** man die Reinigung des Wassers nach Schritt c-d in einem oder mehreren zusätzlichen Reinigungsschritten, die auf die Rückgewinnung einer oder mehrerer zusätzlicher Verunreinigungen in dem Wasser abgestellt und optimiert sind, fortsetzt.

9. Verfahren nach Anspruch 8, **dadurch gekennzeichnet, daß** einer der zusätzlichen Schritte aus Schritt e besteht, den man nach Schritt c durchführt und bei dem man Zink zurückgewinnt, vorzugsweise indem man das Wasser durch eine Ionenaustauschverbindung vom Typ B, die sich von der Ionenaustauschverbindung vom Typ A unterscheidet, leitet und danach die Ionenaustauschverbindung B zur Rückgewinnung einer Lösung (12) eines Zinksalzes regeneriert (11) oder indem man dem Wasser eine Fällungschemikalie (15) zur Ausfällung eines Zinksalzes zusetzt, welches danach von dem Wasser abgetrennt wird (17).

10. Verfahren nach Anspruch 9, **dadurch gekennzeichnet, daß** die Ionenaustauschverbindung vom Typ B aus einer sauren oder neutralen Kationenaustauschverbindung mit einer gewichtsbezogenen Zn²⁺/Ca²⁺-Selektivität von mehr als 100 und einer gewichtsbezogenen Zn²⁺/Al³⁺-Selektivität von mehr als 100 bei pH < 7 besteht.

11. Verfahren nach Anspruch 9, **dadurch gekennzeichnet, daß** die Fällungschemikalie (15) aus einem Sulfid, vorzugsweise Natriumsulfid oder Grünlauge, besteht und der gebildete Niederschlag vor der Abtrennung (17) ausgeflockt wird.

12. Verfahren nach Anspruch 8, **dadurch gekennzeichnet, daß** einer der zusätzlichen Schritte aus Schritt f besteht, den man nach Schritt c durchführt und bei dem man Aluminium zurückgewinnt, vorzugsweise indem man dem Wasser eine Fällungschemikalie (18) zur Ausfällung eines Aluminiumsalzes zusetzt, welches danach von dem Wasser abgetrennt wird (20).

13. Verfahren nach einem der vorhergehenden Ansprüche, **dadurch gekennzeichnet, daß** nach dem letzten Schritt des Verfahrens im wesentlichen reines Wasser (21) verbleibt, welches als Prozeßwasser verwendet oder an einen Empfänger abgegeben wird.

## Revendications

1. Procédé d'obtention d'un sel de fer pratiquement pur à partir d'eau acide contaminée par des métaux (1) comprenant du Fe²⁺, **caractérisé par** les étapes suivantes :
a) ladite eau contaminée est amenée à passer à travers un composé échangeur d'ions à activité cationique d'un type A, qui est sélectif vis-à-vis de Fe³⁺,
b) l'eau de l'étape a est traitée avec un ou plusieurs agents oxydants, de telle sorte que le Fe²⁺ présent dans l'eau soit oxydé en Fe³⁺,
c) l'eau de l'étape b, comprenant à présent du Fe³⁺, est amenée à passer à travers un composé échangeur d'ions du même type, type A, que le composé échangeur d'ions dans l'étape a,
d) le composé échangeur d'ions dans l'étape c est régénéré, une solution dudit sel de fer pratiquement pur étant obtenue.

2. Procédé suivant la revendication 1, **caractérisé en ce que**, dans l'étape a, l'eau est purifiée également en ce qui concerne certains autres ions métalliques présents à de faibles concentrations contaminantes dans l'eau, de préférence des ions cuivre, qui deviennent également fixés par le composé échangeur d'ions à activité cationique de type A.

3. Procédé suivant la revendication 2, **caractérisé en ce que** le composé échangeur d'ions dans l'étape a est régénéré (2, 22), ce qui permet de récupérer un sel de cuivre (23).

4. Procédé suivant l'une quelconque des revendications précédentes, **caractérisé en ce que** ledit composé échangeur d'ions de type A consiste en un composé échangeur de cations acide ayant une sélectivité Fe³⁺/Zn²⁺ supérieure à 1000 à pH < 2,5, calculée sur base pondérale.

5. Procédé suivant l'une quelconque des revendications précédentes, **caractérisé en ce que** le Fe²⁺ présent dans l'eau est oxydé pratiquement totalement en Fe³⁺ dans l'étape b, ledit agent oxydant (4, 5) étant choisi dans le groupe consistant en air, oxygène gazeux, peroxyde d'hydrogène, ozone et leurs associations, de préférence dans des étapes de traitement avec un effet oxydant successivement croissant, l'une après l'autre.

6. Procédé suivant l'une quelconque des revendications précédentes, **caractérisé en ce que** ladite solution de l'étape d contenant un sel de fer est concentrée (8) et est ensuite utilisée comme agent chimique de purification d'eau (9).

7. Procédé suivant l'une quelconque des revendications précédentes, **caractérisé par** une étape supplémentaire, étape g, qui est mise en oeuvre directement avant ou directement après l'étape a, étape g dans laquelle l'eau est traitée avec un agent oxydant (24) de telle sorte que le Fe²⁺ présent dans l'eau soit partiellement oxydé à Fe³⁺, ledit agent oxydant consistant de préférence en air et ledit traitement de l'étape g étant de préférence effectué dans des conditions de mise sous pression.

8. Procédé suivant l'une quelconque des revendications précédentes, **caractérisé en ce que** la purification de l'eau se poursuit après les étapes c-d, dans une ou plusieurs étapes de purification supplémentaire adaptées et optimisées pour récupérer un ou plusieurs contaminants supplémentaires présents dans l'eau.

9. Procédé suivant la revendication 8, **caractérisé en ce qu'**une des étapes supplémentaires consiste en une étape e, qui est mise en oeuvre après l'étape c, étape dans laquelle le zinc est récupéré, de préférence en amenant l'eau à passer à travers un composé échangeur d'ions d'un type B, qui est différent du composé échangeur d'ions de type A, composé échangeur d'ions B qui est ensuite régénéré (11) pour récupérer une solution (12) d'un sel de zinc, ou bien en ajoutant un agent chimique de précipitation (15) à l'eau pour la précipitation d'un sel de zinc qui est ensuite séparé (17) de l'eau.

10. Procédé suivant la revendication 9, **caractérisé en ce que** ledit composé échangeur d'ions de type B consiste en un composé échangeur de cations acide ou neutre ayant une sélectivité Zn²⁺/Ca²⁺ supérieure à 100 et une sélectivité Zn²⁺/Al³⁺ supérieure à 100, à pH < 7 et calculées sur base pondérale.

11. Procédé suivant la revendication 9, **caractérisé en ce que** ledit agent chimique de précipitation (15) consiste en un sulfure, de préférence le sulfure de sodium ou la liqueur verte, et **en ce que** le précipité formé est floculé avant ladite séparation (17).

12. Procédé suivant la revendication 8, **caractérisé en ce qu'**une des étapes supplémentaires consiste en une étape f, qui est mise en oeuvre après l'étape c, étape f dans laquelle l'aluminium est récupéré, de préférence par addition d'un agent chimique de précipitation (18) à l'eau pour la précipitation d'un sel d'aluminium qui est ensuite séparé (20) de l'eau.

13. Procédé suivant l'une quelconque des revendications précédentes, **caractérisé en ce que** de l'eau pratiquement pure (21) reste après une dernière étape dans le procédé, eau qui est utilisée comme eau industrielle ou qui est envoyée à un récipient.
